# EUROPÄISCHE PATENTSCHRIFT

(11) **EP 0 595 212 B1**
(45) Veröffentlichungstag und Bekanntmachung des Hinweises auf die Patenterteilung: **26.03.1997**
(21) Anmeldenummer: 93117119.3
(22) Anmeldetag: 22.10.1993
(51) Int. Cl.: B65D 51/20, B65D 39/04, B65D 43/10, B29C 45/44

(54) **Stopfen für einen Behälter und Verfahren zur Herstellung des Stopfens**
Plug for a container and method to produce the plug
Bouchon pour un récipient et procédé pour la fabrication du bouchon

(30) Priorität: 30.10.1992 DE 4236741
(43) Veröffentlichungstag der Anmeldung: 04.05.1994
(73) Patentinhaber: GAPLAST GmbH, D-82442 Saulgrub (DE)
(72) Erfinder: Kneer, Roland, D-82490 Farchant (DE)
(74) Vertreter: Flosdorff, Jürgen, Dr.

(56) Entgegenhaltungen:
- EP-A- 0 202 506
- EP-A- 0 245 534
- DE-A- 2 801 277
- GB-A- 2 260 534
- US-A- 4 496 302

## Beschreibung

Die Erfindung betrifft einen Kunststoffstopfen für einen Behälter mit einem Deckelteil mit einer den Behälterhals umgreifenden Umfangswand, an deren Unterkante ein umlaufender abreißbarer Sicherungsring zur Originalitätssicherung des Behälterinhalts mit nach innen weisenden Blockieransätzen angeformt ist, die in der Befestigungslage des Stopfens einen nach außen weisenden Ringvorsprung des Behälters untergreifen.

Außerdem betrifft die Erfindung ein Verfahren zur Herstellung eines derartigen Stopfens.

Aus der EP-A-0 202 506 ist ein Stopfen als Behälterverschluß bekannt, an dessen Sicherungsring schräg nach innen und in Öffnungsrichtung weisende Laschen angeformt sind, die einen umgebördelten Rand des Behälters untergreifen. Dieser Stopfen ist nur dann ohne Beschädigung der Sollbruchnaht des Sicherungsrings von dem Behälterhals abzuhebeln (um den Behälterinhalt zu manipulieren), wenn hierzu geeignete Werkzeuge unter den Sicherungsring eingeführt werden und die Laschen gegen den Sicherungsring drücken, woraufhin der Stopfen vom Behälterhals abgenommen werden kann. Diese Vorgehensweise erfordert einige Geschicklichkeit, ist jedoch grundsätzlich möglich.

Der vorbekannte Stopfen wird mittels eines Spritzgußwerkzeugs mit sogenannten Tauchkerne hergestellt, die die schräg nach oben weisenden Laschen hintergreifen. Dieser Kroneneinsatz, der ständig im Kontakt mit dem inneren Formkern eine Relativbewegung zu dem letzteren ausführt, neigt zur unerwünschten Gratbildung und hat eine geringe Standzeit, so daß er häufig ausgetauscht werden muß. Neben den hierdurch erhöhten Materialkosten führen die zugehörigen Stillstandszeiten zu erhöhten Produktionskosten.

Außerdem sind im Deckelbereich des vorbekannten Stopfens Aussparungen vorgesehen, die von den Tauchkerne durchgriffen werden. Diese Aussparungen liegen zwar radial außerhalb der Behälteröffnung, jedoch ermöglichen sie den Eintritt von Fremdpartikeln an den Halsbereich des Behälters, den sie hierbei verschmutzen können.

Der vorliegenden Erfindung liegt die Aufgabe zugrunde, einen Stopfen der betrachteten Art anzugeben, der mit einem zuverlässiger arbeitenden Spritzgußwerkzeug herstellbar ist und der den Randbereich der Behälteröffnung zuverlässig vor Verschmutzung bewahrt.

Eine weitere Aufgabe der Erfindung besteht darin, ein Verfahren zur Herstellung eines derartigen Stopfens anzugeben, das sicherer arbeitet und eine insgesamt billigere Herstellung der Stopfen ermöglicht.

Diese Aufgaben werden erfindungsgemäß durch die im Kennzeichen der Ansprüche 1 und 9 angegebenen Merkmale gelöst. Vorteilhafte Weiterbildungen der Erfindung sind in den abhängigen Ansprüchen gekennzeichnet.

Der erfindungsgemäße Stopfen hat direkt über den Blockieransätzen den Sicherungsring durchgreifende, in Umfangsrichtung verlaufende Aussparungen, die sich jeweils beidseitig über die Blockieransätze hinaus erstrecken, wobei der Sicherungsring und die darüber liegende Umfangswand lediglich an zwischen den Blockieransätzen liegenden Umfangsbereichen oder Stellen miteinander verbunden sind.

Weiterhin wird gemäß der vorliegenden Erfindung vorgeschlagen, daß jeder Blockieransatz querschnittlich durch eine Vergrößerung der Wanddicke des Sicherungsrings, ohne jegliche Freischneidung von dem eigentlichen Sicherungsring, geformt ist.

Diese Ausbildung ermöglicht es, die Blockieransätze durch seitliche Schieber des Formwerkzeugs herzustellen, die in den Bereichen der Blockieransätze mit radial nach innen weisenden Vorsprüngen den Formhohlraum, in dem die obere Umfangswand des Stopfens und der untere Sicherungsring spritzgegossen werden, durchgreifen. Dabei legt sich die radial innere Stirnfläche der Vorsprünge der Schieber dicht an eine entsprechend geformte Fläche einer inneren Konturhülse des Formwerkzeugs an, was weiter unten näher beschrieben wird. Die Stirnfläche der Vorsprünge der Schieber und die jeweils zugehörige Anlagefläche der inneren Konturhülse sind so gestaltet, daß der geformte Stopfen von der Konturhülse abgezogen bzw. abgeschoben werden kann, ohne daß hierbei die Verbindung des Sicherungsrings mit der oberen Umfangswand des Stopfens beschädigt wird.

Da der Blockieransatz durch Vergrößerung der Wandstärke des Sicherungsringes ausgebildet ist, ohne von der Innenwandfläche freigeschnitten zu sein, wie dies bei dem eingangs als Stand der Technik gewürdigten Stopfen der Fall ist, läßt sich die Form der Blockieransätze auch nicht durch unter den Sicherungsring eingeführte Werkzeuge verändern, so daß sie hierdurch nicht in eine unwirksame Lage gebracht werden können, wie dies bei einer freigeschnittenen Lasche der Fall ist. Somit ist der Inhalt des Behälters zuverlässiger gegen Manipulation gesichert.

Der Blockieransatz des erfindungsgemäßen Stopfens hat vorteilhafterweise einen schräg nach innen und in Richtung des Deckelteils überstehenden Randkantenabschnitt, der zacken- oder hakenförmig nach oben über den unteren Rand der Aussparung der Wand des eigentlichen Sicherungsrings vorsteht und in der Einbaulage den Ringvorsprung des Behälterhalses massiv und sicher untergreift. Dabei ist der Blockieransatz in dieser Form problemlos mit den seitlichen Schiebern des Formwerkzeugs herstellbar.

Bei dem erfindungsgmäßen Stopfen werden die Blockieransätze demnach nicht durch einen Kroneneinsatz bzw. Tauchkerne ausgebildet, die gemäß dem eingangs gewürdigten Stand der Technik durch Aussparungen des Deckelteils geführt werden müssen, sondern es kommen seitliche Schieber, vorzugsweise drei bis vier Schieber, zum Einsatz, bei denen keine kritische Gratbildung auftritt, und die eine erheblich längere Nutzungsdauer haben mit entsprechend geringeren, werkzeugbedingten Stillstandszeiten. Damit läßt sich der erfindungsgemäße Stopfen billiger herstellen.

In weiterer Ausgestaltung der Erfindung kann vorgesehen sein, daß die Wandstärke des Blockieransatzes von unten nach oben zunächst allmählich zunimmt, womit sich die Wand nach innen beispielsweise keilförmig verbreitert, um im Bereich des oberen Endabschnitts, d.h. des überstehenden, haken- oder zackenförmigen Randkantenabschnitts konstant zu bleiben oder sich leicht bogenförmig zu krümmen. Die Innenkontur des Blockieransatzes kann jedoch auch gewölbt verlaufen. Wichtig ist, daß der anschließende Abschnitt der Konturhülse so geformt ist, daß der Blockieransatz beim Entformen glatt über diesen Abschnitt gleiten kann, ohne daß der Sicherungsring ab- oder aufgerissen wird.

Hierzu wird vorgeschlagen, daß der Sicherungsring nur durch Abreißstege mit der Umfangswand verbunden ist, und zwar ist mit großem Vorteil vorgesehen, daß jeweils nur ein Steg mittig im Zwischenraum zwischen jeweils zwei benachbarten Blockieransätzen ausgebildet ist. Abgesehen von diesen wenigen Stegen ist somit der Sicherungsring durch einen ringförmigen Zwischenraum von der Umfangswand getrennt.

Hiermit kann sich der Sicherungsring in einem ausreichenden Maße nach außen verformen, ohne daß die Stege, die vorzugsweise eine nach oben spitz zulaufende Form haben, von der Umfangswand abreißen. Wenn die Blockierabsätze nämlich auf der schräg nach außen weisenden Führungsfläche der inneren Konturhülse des Formwerkzeugs zunehmend radial nach außen gedrückt werden, wird der zwischen den benachbarten Stegen liegende Abschnitt des Sicherungsrings elastisch nach außen ausgebaucht, wobei der Stegquerschnitt im Ansatzbereich an die Umfangswand so bemessen wird, daß die Stege den auftretenden Kräften standhalten. Nach dem Entformen kehrt der Sicherungsring wieder in die Ausgangsform zurück, da der Entformungsvorgang bei einer Temperatur ausgeführt wird, bei der das verwendete Material, vorzugsweise Polyäthylen oder Weich-PVC oder ein Elastomer, im wesentlichen vollelastisch ist.

In weiterer Ausgestaltung der Erfindung wird vorgeschlagen, daß die Blockieransätze etwa dieselbe Umfangserstreckung haben wie die dazwischen liegenden Umfangsbereiche. Da hiermit insgesamt die Hälfte des Umfangs des Sicherungsrings blockierend unter den Ringvorsprung zu zugehörigen Behälters greift, ist ein mutwilliges "Abhebeln" des Stopfens zur Manipulation des Behälterinhalts ausgeschlossen.

Wie bereits erwähnt, werden gemäß dem erfindungsgemäßen Verfahren die Umfangswand und der Sicherungsring mit den Blockieransätzen in einem Spritzgußformwerkzeug mit vorzugsweise drei oder vier seitlichen Schiebern und einer inneren Konturhülse geformt, woraufhin der zweckmäßigerweise bei 180° bis 210° in die Form eingebrachte Weichkunststoff auf ca. 80° gekühlt wird, damit er aus dem thermoplastischen in den thermoelastischen Zustand übergeht. Nachdem die Schieber radial nach außen bewegt sind, wird der Stopfen in axialer Richtung von der Konturhülse heruntergeschoben, wobei die Blockierabschnitte glatt über die zugeordneten Flächen der Konturhülse gleiten und die zwischen den Abreißstegen liegenden Umfangsabschnitte des Sicherungsrings vorübergehend elastisch ausbauchen, um nach dem Entformen in die Kreisringform zurückzukehren.

Die innere Konturhülse des Formwerkzeugs hat in der zylindrischen Außenfläche Vertiefungen, deren Konturen im unteren Bereich mit dem radial innen liegenden Flächen der Blockieransätze und in dem darüber anschließenden Bereich mit der Stirnfläche der Ansätze der seitlichen Schieber übereinstimmen, die die Aussparungen über den Blockieransätzen bilden. Hierbei ist es wichtig, daß der obere Bereich der Vertiefung der Konturhülse, an dem die geformten Blockieransätze bei der Abnahme des Stopfens entlang gleiten, eine glatte, stetige Gleitfläche ohne Abstufung oder andere Unstetigkeit bildet. Bevorzugt ist, daß diese für das Gelingen des Entformungsvorgangs maßgebliche Führungsfläche geradlinig verläuft, so daß der zugeordnete Wandabschnitt des Sicheringsrings gleichmäßig nach außen verformt wird. Allerdings liegt es auch im Rahmen der Erfindung, daß diese Führungsfläche leicht gewölbt sein kann, was insbesondere an ihrem Anfangs- und Endbereich zweckmäßig sein kann.

Weitere Merkmale, Vorteile und Einzelheiten der Erfindung ergeben sich aus der nachfolgenden Beschreibung einer bevorzugten Ausführungsform eines erfindungsgemäßen Stopfens sowie anhand der Zeichnung. Dabei zeigen:
- Fig. 1: eine Horizontalschnittansicht durch eine Hälfte des Stopfens im Bereich des ringförmigen Zwischenraums zwischen dem Sicherungsring und der darüberliegenden Umfangswand;
- Fig. 2: jeweils zur Hälfte eine Seitenansicht und einen Vertikalschnitt des Stopfens gemäß Figur 1 entlang der Linie II-II in Fig. 1;
- Fig. 3: einen Vertikalschnitt durch den Randbereich des Stopfens gemäß Fig. 1 entlang der Linie III-III;
- Fig. 4: eine vergrößerte Darstellung der Figur 2 mit den Randbereich ausbildenden Teilen des Spritzgußwerkzeugs.

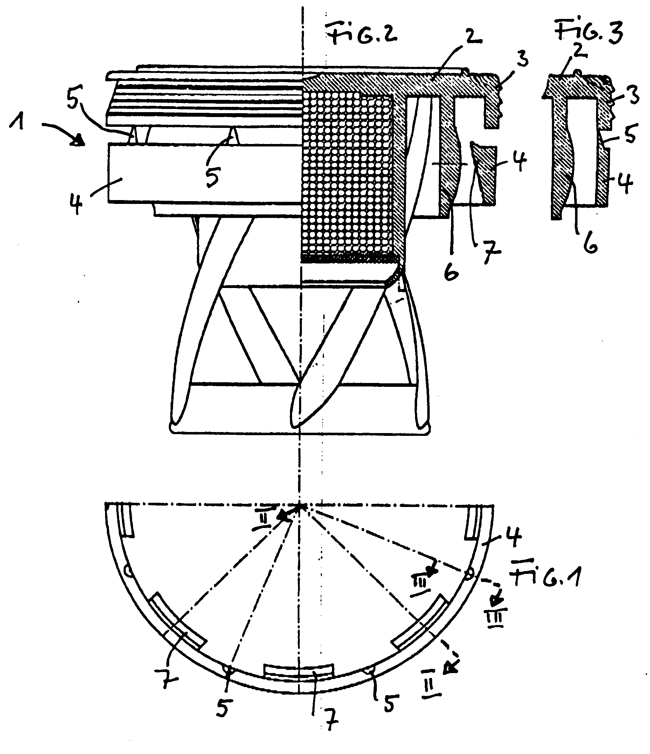

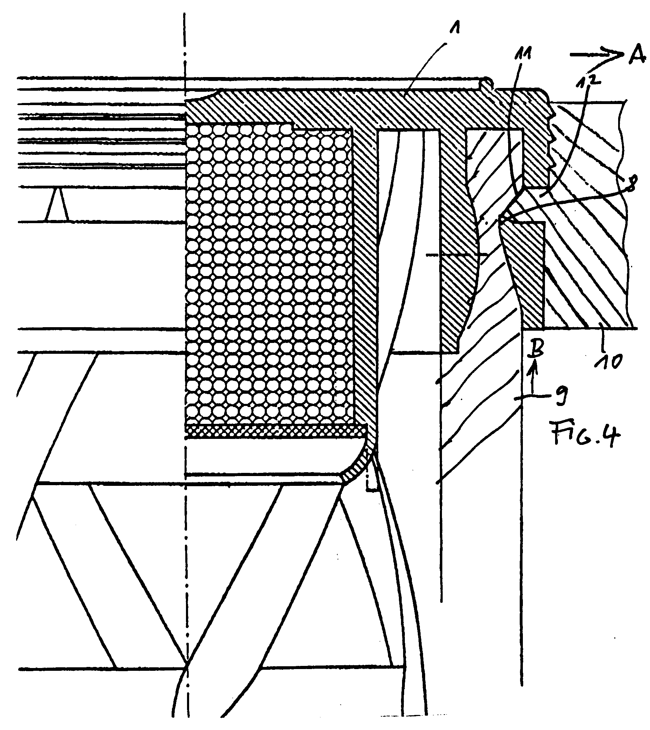

Die Figuren zeigen einen erfindungsgemäßen Stopfen 1 mit einem ebenen Deckelteil 2 und einer anschließenden zylindrischen Umfangswand 3, die den oberen Rand bzw. Hals eines mit dem Stopfen zu verschließenden Behälters umgreift. Unterhalb der Umfangswand 3 befindet sich ein Sicherungsring 4, der über Abreißstege 5 mit der Umfangswand 3 verbunden ist. Die Abreißstege 5 haben die Form eines halben Kreiskegels, wie aus einer Zusammenschau der Figuren 1 und 3 zu ersehen ist.

Radial innerhalb der Umfangswand 3 und des hiermit im wesentlichen fluchtenden Sicherungsrings 4 ist an dem Deckelteil 1 eine zylindrische Olive 6 angeformt, die in den Behälterhals eingreift und diesen im Preßsitz abdichtet.

An der Innenwand des Sicherungsrings 4 sind im dargestellten Beispiel acht Blockieransätze 7 angeformt, die in Umfangsrichtung gleichmäßig voneinander beabstandet sind und eine Umfangserstreckung haben, die im wesentlichen mit den Zwischenräumen zweier benachbarter Blockieransätze 7 übereinstimmt. Die Blockieransätze sind -wie Figur 4 deutlicher erkennen läßt- durch eine Vergrößerung der Wandstärke des Sicherungsrings 4 ausgebildet, wobei die Wandstärke von unten nach oben zunächst geradlinig, keilförmig zunimmt und im Bereich eines oberen, zackenförmig nach oben überstehenden Eckabschnitts 8 bogenförmig in eine Vertikale übergeht. Die obere Kontur des Sicherungsrings mit dem Blockieransatz 7 verläuft zunächst horizontal und dann im flachen Winkel nach oben, wodurch der zacken- oder hakenförmige Eckabschnitt 8 ausgebildet ist, der einen nicht dargestellten nach außen weisenden Ringvorsprung am Behälterhals so untergreift, daß die Blockieransätze 7 nicht ohne Abreißen der Stege 5 über den Ringvorsprung geschoben werden können. Das erfindungsgemäße Verfahren zur Ausbildung des Randbereichs des Stopfens wird weiter unten mit Bezug auf Figur 4 beschrieben.

Der Sicherungsring 4 ist über acht Abreißstege 5 mit der Umfangswand 3 verbunden, wobei die Abreißstege 5 gleichmäßig voneinander beabstandet jeweils in der Mitte zwischen benachbarten Blockieransätzen 7 angeordnet sind. Hierdurch erhält der Sicherungsring 4 die erforderliche Bewegungsmöglichkeit, die erst den Austritt aus der Spritzgußform ermöglicht. Figur 3 zeigt einen Längsschnitt durch einen der spitzwinklig nach oben zulaufenden Abreißstege 5, deren Querschnittsabmessung im oberen Ansatzbereich an die Umfangswand 3 so bemessen sind, daß die Stege beim Zwangsentformen nicht abreißen.

Figur 4 läßt erkennen, daß der im Zusammenhang mit der vorliegenden Erfindung interessierende Randbereich des Stopfens 1 mit einem Formwerkzeug hergestellt wird, welches eine zylindrische Konturhülse 9 und mehrere, im vorliegenden Beispiel vier Schieber 10 aufweist, die einen radial äußeren Ring bilden. Die Konturhülse 9 begrenzt mit ihrer Innenwandfläche die zu formende Olive 6 und hat eine kreiszylindrische Außenfläche, in der sich im Bereich der zu formenden Blockieransätze 7 Vertiefungen befinden, die eine geradlinig oder gewölbt zunehmende Wandstärke des Sicherungsrings 4 im Bereich der Blockieransätze 7 hervorrufen. Von der Oberkante der Blockieransätze 7, d.h. des zackenartigen Randabschnitts 8 an verläuft eine ebene schräge Führungsfläche 11 bis zum unteren, inneren Eckpunkt der zu formenden Umfangswand 3. Die Schieber 10 haben einen insgesamt ringförmigen Vorsprung 12, aus dem lediglich die insgesamt acht Aussparungen für die Abreißstege 7 ausgenommen sind, um den ringförmigen Zwischenraum zwischen der Umfangswand 3 und dem Sicherungsring 4 auszubilden. Außerdem enthalten die Schieber zur Ausbildung der Blockieransätze 7 radial nach innen weisende Ansätze, die in einer der Führungsfläche 11 der Konturhülse 9 entsprechenden Stirnfläche enden. Diese Stirnflächen liegen beim Spritzgießen des Stopfens an den Führungsflächen 11 der Konturhülse 9 dicht an.

Der Stopfen wird aus einem Weichkunststoff spritzgegossen, woraufhin das zunächst thermoplastische Material auf ca. 80° abgekühlt wird. Bei dieser Temperatur ist der Weichkunststoff praktisch vollelastisch. Nachdem die Schieber radial nach außen bewegt sind (Pfeil A in Figur 4), wird der Stopfen in Richtung des Pfeils B von der Konturhülse 9 abgeschoben (nachdem auch der innere Formkern entnommen wurde, so daß sich hierbei die Olive 6 radial nach innen bewegen kann).

Beim Zwangsentformen gleiten die Blockieransätze 7 glatt an den Führungsflächen 11 nach außen, wobei sich jeweils der zwischen den Abreißstegen 5 befindliche Ringabschnitt unter zunehmender Ausbuchtung nach außen aufweitet. Die Stege, die im gewissen Umfang auch an der Verformung beteiligt sind, sind dabei so bemessen, daß sie den Belastungen standhalten.

Nachdem der Stopfen entformt ist, kehrt der Sicherungsring 4 in die Ausgangsform zurück.

Im abgekühlten Zustand verliert der Weichkunststoff den größten Teil seiner Elastizität, so daß der Sicherungsring nicht wie bei dem Entformungsvorgang so weit elastisch aufweitbar wäre, um den Stopfen ohne Beschädigung der Abreißstege von einem Behälterhals "abzuhebeln".

Da die Schieber beim Öffnen und Schließen der Form nicht an der Konturhülse 9 entlang gleiten, wie dies bei den Tauchkerne des eingangs gewürdigten Standes der Technik der Fall ist, tritt hier keine Gratbildung auf, und die Standzeiten des erfindungsgemäßen Formwerkzeugs sind deutlich höher als bei der herkömmlichen Form. Außerdem machen die massiv am Sicherungsring 4 angeformten Blockieransätze 7 eine Manipulation durch von unten in den Sicherungsring eingeführte Werkzeuge sinnlos, da die Blockieransätze 7 hierdurch nicht wirkungslos gemacht werden können.

## Patentansprüche

1. Stopfen (1) für einen Behälter mit einem Deckelteil (2) mit einer den Behälterhals umgreifenden Umfangswand (3), an deren Unterkante ein umlaufender abreißbarer Sicherungsring (4) zur Originalitätssicherung des Behälterinhalts mit nach innen weisenden Blockieransätzen (7) angeformt ist, die in der Befestigungslage des Stopfens einen nach außen weisenden Ringvorsprung des Behälters untergreifen,
**dadurch gekennzeichnet**,
daß direkt über den Blockieransätzen (7) den Sicherungsring (4) durchgreifende Aussparungen ausgebildet sind, die sich in Umfangsrichtung jeweils beidseitig über die Blockieransätze (7) hinaus erstrecken, und daß der Sicherungsring (4) und die Umfangswand (3) lediglich an zwischen den Blockieransätzen (7) liegenden Stellen miteinander verbunden sind.

2. Stopfen nach Anspruch 1,
dadurch gekennzeichnet, daß jeder Blockieransatz (7) querschnittlich durch eine Vergrößerung der Wandstärke des Sicherungsrings (4), ohne Freischneidung von dessen Innenwandfläche ausgebildet ist.

3. Stopfen nach Anspruch 1 oder 2,
dadurch gekennzeichnet, daß jeder Blockieransatz (7) einen schräg nach innen und oben überstehenden Randkantenabschnitt (8) aufweist.

4. Stopfen nach einem der Ansprüche 1 bis 4,
dadurch gekennzeichnet, daß der Sicherungsring (4) nur durch Abreißstege (5) mit der Umfangswand (3) verbunden ist.

5. Stopfen nach Anspruch 4,
dadurch gekennzeichnet, daß jeweils ein Steg (5) mittig im Umfangszwischenraum zwischen den Blockieransätzen (7) ausgebildet ist.

6. Stopfen nach Anspruch 4 oder 5,
dadurch gekennzeichnet, daß die Stege eine nach oben spitz zulaufende Form haben.

7. Stopfen nach einem der Ansprüche 1 bis 6,
dadurch gekennzeichnet, daß die Blockieransätze (7) etwa dieselbe Umfangserstreckung haben wie die dazwischen liegenden Abschnitte.

8. Stopfen nach einem der Ansprüche 1 bis 7,
dadurch gekennzeichnet, daß der Stopfen aus einem Weichkunststoff wie PE, Weich-PVC oder einem Elastomer besteht.

9. Verfahren zur Herstellung eines Stopfens nach einem der Ansprüche 1 bis 8,
dadurch gekennzeichnet, daß die Umfangswand (3) und der Sicherungsring (4) mit den Blockieransätzen (7) in einem Spritzgußformwerkzeug mit seitlichen, die Blockieransätze (7) nach oben begrenzenden Schiebern (10) und einer inneren Konturhülse (9) geformt werden, daß das Weichkunststoffmaterial in dem Formwerkzeug auf ca. 80° gekühlt wird, woraufhin die Schieber (10) radial nach außen bewegt werden und anschließend der Stopfen (1) in axialer Richtung von der Konturhülse (9) geschoben wird, wobei die Blockierabschnitte (7) glatt über Führungsflächen (11) der Konturhülse (9) gleiten und die zwischen den Abreißstegen (5) liegenden Umfangsabschnitte des Sicherungsrings (4) vorübergehend elastisch ausbauchen.

## Claims

1. A plug (1) for a container with a lid part (2) having a peripheral wall (3) engaging around the neck of the container, a peripherally extending tear-off security ring (4) moulded on at the lower edge of the peripheral wall for assuring the integrity of the contents of the container with inwardly facing blocking extensions (7) which in the secured position of the plug engage from below an outwardly facing annular projection of the container,
characterised in that
recesses engaging directly through the blocking extensions (7) of the security ring (4) are formed which extend peripherally respectively on both sides outwardly over the blocking extensions (7), and in that the security ring (4) and the peripheral wall (3) are connected only at the positions lying between the blocking extensions (7).

2. Plug according to claim 1,
characterised in that each blocking extension (7) is formed it, cross-section by all enlargement of the wall thickness of the security ring (4) without relief-cutting its internal wall surface.

3. A plug according to claim 1 or 2,
characterised in that each blocking extension (7) has an oblique inwardly and upwardly upstanding edge rim section (8).

4. A plug according to any one of claims 1 to 4,
characterised in that the security ring (4) is connected with the peripheral wall (3) only via tear-off webs (5).

5. A plug according to claim 4,
characterised in that in each case a web (5) is formed centrally in the peripheral intermediate space between the blocking extensions (7).

6. A plug according to claim 4 or 5,
characterised in that the webs have an upwardly acutely extending shape.

7. A plug according to any one of claims 1 to 6,
characterised in that the blocking extensions (7) have approximately the same peripheral extent as the sections lying therebetween.

8. A plug according to any one of claims 1 to 7,
characterised in that the plugs are made of a soft plastics material such as PE, soft PVC or an elastomer.

9. A process for the manufacture of a plug according to any one of claims 1 to 8,
characterised in that the peripheral wall (3) and the security ring (4) with the blocking extensions (7) are moulded in an injection moulding tool will, lateral pushers (10) which bound the blocking extensions (7) at the top and an internal contour sleeve (9), in that the soft plastic material is cooled in the moulding tool to approximately 80°, whereafter the pushers (10) are moved radially outwardly and subsequently the plugs (1) are pushed in the axial direction from the contour sleeve (9), whereby the blocking sections (7) slide smoothly over the guide surfaces (11) of the contour sleeve (9) and temporarily elastically bulge out die peripheral sections of die security ring (4) disposed between the tear-off webs (5).

## Revendications

1. Bouchon pour un récipient avec une partie formant couvercle et une paroi périphérique, qui entoure le goulot du récipient et au bord inférieur de laquelle est moulée une bague de serrage circulaire, pouvant être arrachée afin d'assurer la sécurité d'origine du contenu, bague dont les talons de blocage pointent vers l'intérieur et qui, en position de fixation du bouchon, contournent par le bas une saillie annulaire du récipient qui, elle, est tournée vers l'extérieur,
caractérisé en ce que,
juste au-dessus des talons de blocage (7), sont ménagés des évidements qui traversent la bague de serrage (4) et qui s'étendent, dans le sens périphérique, des deux côtés au-delà des talons de blocage (7) et en ce que la bague de serrage (4) et la paroi périphérique (3) sont reliées entre elles simplement aux endroits se trouvant entre les talons de blocage (7).

2. Bouchon selon la revendication 1,
caractérisé en ce que chaque talon de blocage (7) est constitué, vue en coupe transversale, par un agrandissement de l'épaisseur de paroi de la bague de serrage (4) sans dégagement des surfaces de paroi interne de ce dernier.

3. Bouchon selon la revendication 1 ou 2,
caractérisé en ce que chaque talon de serrage (7) présente une section vive de bordure (8) faisant saillie vers le haut et inclinée vers l'intérieur.

4. Bouchon selon l'une des revendications 1 à 3,
caractérisé en ce que la bague de serrage (4) n'est reliée à la paroi périphérique (3) que par des ailettes d'arrachage (5).

5. Bouchon selon la revendication 4,
caractérisé en ce qu'une ailette (5) est ménagée, à chaque fois, au milieu dans l'espace périphérique intermédiaire entre les talons de blocage (7).

6. Bouchon selon la revendication 4 ou 5,
caractérisé en ce que les ailettes ont une forme s effilant en pointe vers le haut.

7. Bouchon selon l'une des revendications 1 à 6,
caractérisé en ce que les talons de blocage (7) présentent sensiblement la même extension périphérique que les portions se trouvant entre.

8. Bouchon selon l'une des revendication 1 à 7,
caractérisé en ce que le bouchon se compose d'une matière plastique molle comme le PE, le PVC mou ou en élastomère.

9. Procédé pour la fabrication d'un bouchon selon l'une des revendications 1 à 8,
caractérisé en ce que la paroi périphérique (3) et la bague de serrage (4) sont moulées, avec les talons de blocage (7), dans un outil de moulage à injection muni de coulisses latérales (10) et d'une douille de contour interne (9), en ce que la matière plastique molle est refroidie dans l'outil de moulage à environ 80°, les coulisses (10) se déplaçant alors radialement vers l'extérieur et ensuite le bouchon (1) étant poussé pour être éloigné de la douille de contour (9) dans le sens axial, ce qui a pour effet que les portions de blocage (7) glissent, de manière uniforme, sur des surfaces de guidage (11) de la douille de contour (9) et déforment provisoirement les portions périphériques de la bague de serrage (4), lesquelles se trouvent entre les ailettes d'arrachage (5).
